# EUROPEAN PATENT SPECIFICATION

(11) **EP 4 208 370 B1**
(45) Date of publication and mention of the grant of the patent: **18.09.2024**
(21) Application number: 22720429.4
(22) Date of filing: 04.04.2022
(51) Int. Cl.: B60P 1/02, B60P 1/64, B60P 7/13, B65D 88/12, B65D 90/00, B65D 90/14

(54) **INDUSTRIAL TRUCK FOR TRANSPORTING CONTAINERS ON A SUPPORT FRAME**
FLURFÖRDERFAHRZEUG ZUM TRANSPORTIEREN VON BEHÄLTERN AUF EINEM STÜTZRAHMEN
CAMION INDUSTRIEL POUR LE TRANSPORT DE CONTENEURS SUR UNE OSSATURE DE SUPPORT

(30) Priority: 13.04.2021 EP 21167976
(43) Date of publication of application: 12.07.2023
(73) Proprietor: BASF SE, 67056 Ludwigshafen am Rhein (DE); VDL Steelweld B.V., 4825 BJ Breda (NL)
(72) Inventor: BIEKER, Thorsten, 67056 Ludwigshafen (DE); SENNINGER, Roland, 67056 Ludwigshafen (DE); SMITS, Karel Andreas, 4825 BJ Breda (NL)
(74) Representative: BASF IP Association
(86) International application number: PCT/EP2022/058832
(87) International publication number: WO 2022/175563

(56) References cited:
- WO-A1-2017/078625
- DE-A1- 102018 210 348
- DE-A1- 4 412 085
- GB-A- 2 183 713
- US-B2- 9 340 146

## Description

### TECHNICAL FIELD

The invention concerns an industrial truck for transporting a container on a support frame, the industrial truck comprising a vehicle frame with height-adjustable wheel suspensions and engagement means for fixing the support frame which can be picked up by the industrial truck, the engagement means being mounted on the vehicle frame so as to be movable between a passive position and an active position.

### BACKGROUND ART

Industrial trucks and support frames for transporting containers are well known in the art. The document DE 2 137 729 A, published in 1973, discloses a vehicle with a swap body which can be lifted off the vehicle frame. The swap body comprises legs via which it can be placed on the ground. The legs are pivotably attached to the swap body like a parallelogram or trapezoid such that a horizontal movement of the swap body induces a lifting or lowering movement of the swap body. The vehicle comprises a locking device by means of which the swap body placed on the vehicle can be connected to the vehicle frame in such a way that it cannot be lifted off or moved while locked. The swap body has engagement elements which engage in holders of the vehicle frame and which have slots. In order to lock a plurality of locking elements together, the swap body is moved horizontally after being placed down on the vehicle and the engagement elements of the locking elements are inserted into the horizontal sections of the slots.

Document DE 20 2010 006 522 U1 discloses a changing device for connecting and disconnecting a swap body and a transport vehicle. In a parking position, the swap body is located on support legs with a distance of the swap body to the ground. To load the swap body onto the vehicle the swap body is lifted out of the support legs by raising the changing device. This is done by raising the level of the vehicle's air suspension. The swap body is then moved in the longitudinal direction onto the vehicle by a shifting device. The locking elements interlock and secure the swap body against vertical movement upwards and in the direction of travel.

Document DE 10 2018 210 348 A1 discloses another changing device for connecting and disconnecting a swap body and a transport vehicle. In a parking position, the swap body is located on support legs with a distance of the swap body to the ground. To load the swap body onto the vehicle, the vehicle drives under the swap body and lifts it via the vehicle's air suspension. On its underside, the swap body is equipped with two guide rails that are configured to engage with track roller devices installed on the cargo area of the vehicle. The ends of the guide rails facing the vehicle front are angled outwards facilitating the loading and automatic lateral centering of the swap body onto the vehicle.

To interlock a container on a vehicle or on a support frame, twist locks are most common in the art. Twist locks are locking devices that connect swap bodies or ISO containers to each other or to a carrier vehicle. Twist locks are inserted into the standardized corner castings of the containers. Alternatively, the containers are placed on the twist locks permanently attached to the vehicle. A part of the twist lock is then twisted by 90° to create a positive connection.

Document EP 1 937 511 B1 discloses an alternative locking device for locking an ISO-standardized corner casting of a freight container to a vehicle. The locking device comprises locking means which are adjustable between an opened position in which the locking means can freely pass an opening of the corner casting, and a closed position in which the locking means hook behind the opening of a wall surrounding the opening of the corner casting. The locking device further comprises operating means which, upon placement of a container on the locking device, are adjustable through cooperation with a wall of the corner casting from an unloaded initial position to an end position loaded by the weight of the container, and an adjusting mechanism with a scissor mechanism which couples the locking means and the operating means in a manner such that upon placement of a corner casting of a container on the locking device, the weight load of the container energizes the locking means towards the closed position.

Document DE 44 12 085 A1 discloses a further device for securing swap bodies to a vehicle. The device is mounted in the frame of the vehicle and includes a clamping device and locking hooks that engage the swap body to be picked up and locked.

Document WO 2017/078625 A1 discloses yet another industrial truck and self-supporting support frame. The device comprises twist locks to interlock the support frame on the vehicle and twist locks to interlock the container on the support frame.

The amount of freight transported via containers has continuously increased over time and it is still increasing, both in number of containers as well as in their frequency of circulation. Conventional means of transportation struggle with this increase and require new techniques for transportation with a higher degree of automation.

It was an object of the invention to provide an industrial truck and a system for loading, transportation and unloading of containers in a simpler and more efficient way than it is known from the prior art. In particular, the industrial truck and the system should be suitable for use in a highly automated environment.

This task is solved according to the invention by an industrial truck according to claim 1, a self-supporting support frame according to claim 8 and a system according to claim 14. Advantageous variants of the industrial truck, the support frame and the system are presented in claims 2 to 7, 9 to 13 and 15 to 16.

### BRIEF DESCRIPTION

A first subject of the invention is an industrial truck for transporting a container on a support frame, the industrial truck comprising a vehicle frame with height-adjustable wheel suspensions and engagement means for fixing the support frame which can be picked up by the industrial truck. The engagement means are mounted on the vehicle frame so as to be movable between a passive position and an active position. The industrial truck has at least one sensor for detecting the position of the support frame relative to the industrial truck. The engagement means comprise a first group of engagement means and a second group of engagement means, the movement of the engagement means from the passive position to the active position taking place in a different spatial direction in the case of the first group than in the case of the second group.

The combination of height-adjustable wheel suspensions and the arrangement of two groups of engagement means working in different spatial directions allows to pick up a container as a load by the industrial truck, to position the load and to fasten it on the industrial truck in one process. Furthermore, the industrial truck according to the invention allows an easy and highly efficient automation of the loading and unloading process.

The movement from the passive position into the active position in the first group of engagement means takes place laterally, and the movement from the passive position into the active position in the second group of engagement means takes place laterally in the opposite direction to the first group. The lateral, opposite movement of the engagement means from the passive position to the active position allows an automatic centering of the support frame on the vehicle frame in relation to the wheel suspensions and thus an equal distribution of the load in the lateral direction.

### Definitions:

"Industrial truck" refers to any vehicle or machine that is designed to transport loads. The industrial truck may be steered by a driver or may be a driverless industrial truck. Industrial trucks are known in the art and are subject to several industrial standards, for example the standard ISO 3691-4:2020(en) by the International Organization for Standardization (ISO).

In a preferred embodiment, the industrial truck is an automated guided vehicle that is automatically controlled and guided in its standard operation mode. Preferably, the automated guided vehicle can be monitored and controlled from a control center.

"Support frame" refers to any self-supporting frame that can be picked up by an industrial truck and that is capable to be loaded with containers, preferably with containers with corner castings.

"Container" refers to any container that can be loaded upon a vehicle or a support frame to be transported by a vehicle. In a preferred embodiment, container refers to an intermodal container or shipping container with corner castings. More preferably the container is a 20-feet or 40-feet standard intermodal container.

In a preferred embodiment the engagement means in their passive position are arranged inside the vehicle frame and can be pivoted into the active position through openings in the upper side of the vehicle frame.

Preferably, the engagement means are arranged in pairs over the length of the industrial truck, wherein each pair comprises an engagement means of the first group and an engagement means of the second group. In one embodiment, at least two pairs of engagement means are present, one pair near the front of the industrial truck and a second pair at the rear of the industrial truck. By arranging the engagement means in pairs over the length of the industrial truck a potential rotational movement of the container relative to the vehicle frame can be avoided.

In a preferred embodiment the engagement means are movable from the passive position to the active position by controllable actuators, the actuators comprising a safety device which ensures the application of force of the actuators on the engagement means in the active position. More preferably, the actuators comprise double-acting cylinders and the safety devices comprise a nonreturn valve in this embodiment. The provision of the safety device has the advantage that a container will stay positioned and fastened on the industrial truck even if there should be an energy loss in the industrial truck. A further advantage of this embodiment is the possibility to apply large forces to fasten and secure the container and thus guarantee a safe transport.

It is further preferred that the engagement means are movable from the passive position to the active position by controllable actuators, the actuators being configured to provide equal forces to the engagement means of the first group and to the engagement means of the second group. The possibility to provide equal forces to the engagement means of both groups supports the automatic centering of the support frame on the vehicle frame in relation to the wheel suspensions and thus an equal distribution of the load in the lateral direction.

In a preferred embodiment at least one distance sensor is provided on the upper side of the vehicle frame for determining the distance between the distance sensor and an object placed on the vehicle frame, in particular a support frame for a container. The signal of the distance sensor can advantageously be processed in a control system to determine if a load is present on the vehicle frame and if this load, in particular a container on a support frame, is positioned correctly on the vehicle frame. The signal of the distance sensor can further be used to check if the engagement means can be activated without damaging the load, which could happen for example if the load is not correctly positioned on the vehicle frame. An automation of the loading and unloading process is thus facilitated.

A second subject of the invention is a self-supporting support frame comprising a top side for receiving a container, an underside for placing the support frame on a transport vehicle, locking means being mounted on the support frame so as to be movable between an open position and a closed position and projecting upwardly from the top side of the support frame so that in their open position they can be inserted into openings on the underside of the container, and a locking mechanism for actuating the locking means. According to the invention, the locking mechanism comprises sliding elements and deflection linkages, wherein the sliding elements are slidably mounted inside the support frame, and the deflection linkages are designed such that a displacement of the sliding elements causes a movement of the locking means from the open position to the closed position, and wherein openings are provided in the underside of the support frame through which engagement means of a transport vehicle can act on the sliding elements.

A support frame according to the invention facilitates an easy automation of the loading and unloading process. The provision of a locking mechanism with sliding elements, deflection linkages and locking means the advantageous effect that a support frame can be loaded and unloaded independently of an industrial truck, and that a container loaded on the support frame can be automatically fastened and secured on the industrial truck during the loading process. A secure connection between industrial truck and support frame is realized by the engagement means acting on the sliding elements, whereas a secure connection between the support frame and the container is realized by the locking means. A further advantage of the automatic fastening via the locking mechanism according to the invention is that it works without additional power supply, which would be necessary if the locking would be done via electrical motors for example.

In a preferred embodiment of the support frame the sliding elements are laterally displaceable mounted in the interior of the support frame, the displacement path of the sliding elements being limited in each case by a stop firmly connected to the support frame, and the sliding elements resting against the respective stop in the closed position of the locking means. The provision of a stop facilitates the positioning of the support frame at a predetermined position on an industrial truck and thus an efficient automation of the loading and unloading processes.

Preferably, the sliding elements have a shape which, when acted upon by engagement means on the sliding elements through the openings in the underside of the support frame, causes the support frame to move downwards in the direction of the engagement means. In this embodiment, the support frame is forced to move towards the vehicle frame, thereby preventing the support frame from inadvertently moving on the vehicle frame. A further advantage is that the forced connection increases the stiffness of the industrial truck by adding the construction strength of the support frame to the construction strength of the vehicle frame.

Preferably, the sliding elements are displaceable mounted in the interior of the support frame with a reset function whereby the sliding elements are returned to their original position when an external force on the sliding elements is removed. The reset function can be realized by a return spring for example. This embodiment has the advantage that the locking means will automatically unlock the container from the support frame and the support frame from the industrial truck as soon as the engagement means of the industrial truck are moved from the closed position to the open position.

In a preferred embodiment of the support frame the deflection linkage comprises at least three rods, the first rod being connected to one of the sliding elements and pointing outwardly in the direction of a side of the support frame, the second rod extending substantially parallel to the side of the support frame and being connected to the first rod via a connecting element, so that the axial movement of the first rod is translated into a rotational movement of the second rod, and the third rod extending from the side of the support frame inwardly toward the center of the support frame, the third rod being connected to the second rod via a connecting element so that the rotational movement of the second rod is translated into an axial movement of the third rod, and the third rod being connected to the locking means via a further connecting element so that the axial movement of the third rod is translated into a movement of the locking means from the open position to the closed position. A deflection linkage according to this embodiment is easy to maintain and fault tolerant. Rods and connecting elements can be chosen from a variety of standard materials that are suitable to transmit high forces. Thus, also large containers with high loads can be loaded, positioned and fastened without problems.

In a preferred embodiment the support frame comprises at least one movable position indicator which takes different positions depending on the presence of a container on the support frame. Providing a position indicator enables a further automation by detecting if a container is positioned on the support frame and if the container is correctly positioned on the support frame. A further advantage is that the distance sensor can be used to determine if the container is ready to be locked and thus preventing potential damages of the locking means. The signals provided by the distance sensor can favorably be used to communicate with a remote control system, for example to check if the support frame is loaded with a container or that a container is correctly positioned on the support frame.

In a preferred variant of this embodiment, the position indicator comprises a pin which is pressed towards the underside of the support frame by the weight of the placed container. A pin, in particular a massive pin made of steel, is a robust and reliable position indicator for heavy loads such as containers.

In an advantageous embodiment, the pin is spring loaded in the sense that the pin is pushed upwards in the direction of a potential load, i.e. a container.

A third subject of the invention is a system comprising an industrial truck and a self-supporting support frame for receiving a container, wherein the industrial truck has height-adjustable wheel suspensions which allow the industrial truck to be lowered and raised relative to the road surface, the support frame comprises four legs, the lateral distance of which is greater than the width of the industrial truck, and the height of which is dimensioned such that the industrial truck can be moved under the support frame in the lowered state, and in the raised state of the industrial truck the legs are at a distance from the road surface. According to the invention the industrial truck has movable engagement means which can engage in openings provided for this purpose in the support frame in order to fix the support frame on the industrial truck, the support frame comprising a locking device which is actuated by the engagement of the engagement means and fixes a container located on the support frame in the locked state.

In a preferred embodiment of the system the support frame comprises movable position indicators that take different positions depending on the presence of a container on the support frame, and in that the transport vehicle comprises sensors that can detect the different positions of the position indicators.

Preferably, the industrial truck has distance sensors at locations corresponding to the position indicators of the support frame, which are set up to determine the distance between the respective position indicator and the associated sensor.

The system according to the invention offers the possibility to fully automate the processes of loading, transportation and unloading of containers. The processes of loading and unloading only require the availability of a support frame, whereas the process of transportation additionally requires the availability of an industrial truck. The separation of these tasks has the advantageous effect that industrial trucks can be efficiently used to transport a multitude of containers with a high degree of automation.

### DETAILED DESCRIPTION

The invention is explained in more detail below with reference to the drawings. The drawings are to be interpreted as in-principle presentation. They do not constitute any restriction of the invention, for example with regard to specific dimensions or design variants. In the figures:
- Fig. 1: shows a system comprising an industrial truck and a support frame for receiving a container according to a first embodiment of the invention in an unlocked state.
- Fig. 2: shows the system according to Fig. 1 in a locked state.
- Fig. 3: shows a detailed view of the locking mechanism of the system of Fig. 1 in a front view.
- Fig. 4: shows a detailed view of the locking mechanism of the system of Fig. 1 in a top view.
- Fig. 5: shows a preferred embodiment of the locking mechanism for the system of Fig. 1 in an unlocked state.
- Fig. 6: shows the locking mechanism of Fig. 5 in a locked state.
- Fig. 7: shows a preferred embodiment of a position indicator and a distance sensor for the system of Fig. 1.
- Fig. 8: shows an example of a loading process for a system of Fig. 1.

### List of reference numerals used:

- 102: industrial truck
- 104: vehicle frame
- 106: first group of engagement means
- 108: second group of engagement means
- 110: support frame
- 112: leg
- 114: container
- 302: sliding element
- 304: deflection linkage
- 306: locking means
- 308: stop
- 502: actuator
- 702: corner casting
- 704: position indicator
- 706: distance sensor
- 802: left distance
- 804: right distance

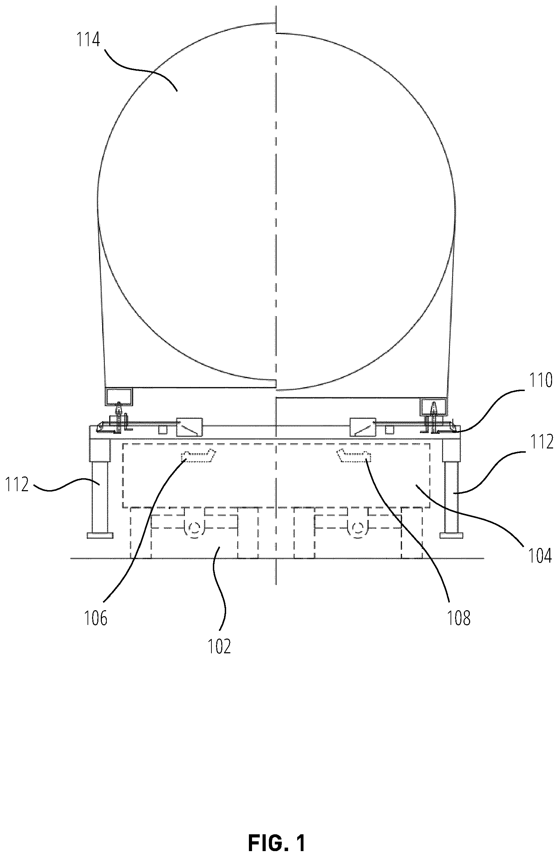

Fig. 1 shows a system according to the invention comprising an industrial truck 102 and a self-supporting support frame 110 for receiving a container 114. The industrial truck 102 comprises a vehicle frame 104 with height-adjustable wheel suspensions which allow the industrial truck 102 to be lowered and raised relative to the road surface. The self-supporting support frame 110 includes four legs 112, the lateral distance of which is greater than the width of the industrial truck 102, and the height of which is dimensioned such that the industrial truck 102 can be moved under the support frame 110 in the lowered state, and that the legs 112 are at a distance from the road surface in the raised state of the industrial truck 102. Fig. 1 shows the raised state of the industrial truck. On the left-hand side of Fig. 1 the system is shown in a state shortly before the container 114 is placed on the support frame 110. On the right-hand side of Fig. 1 the system is shown after the container 114 has been placed on the support frame 110.

The industrial truck 102 has at least one sensor for detecting the position of the support frame 110 relative to the industrial truck. The industrial truck 102 has movable engagement means which can engage in openings provided for this purpose in the support frame 110 in order to fix the support frame 110 on the industrial truck 102. The engagement means are mounted on the vehicle frame 104 so as to be movable between a passive position and an active position. The engagement means comprise a first group of engagement means 106 and a second group of engagement means 108. The movement of the engagement means from the passive position to the active position takes place in a different spatial direction in the case of the first group of engagement means 106 than in the case of the second group of engagement means 108. The support frame 110 includes a locking device which is actuated by the engagement of the engagement means and fixes the container 114 located on the support frame 110 in the locked state. Fig. 1 shows the engagement means in the passive position and thus in an unlocked state.

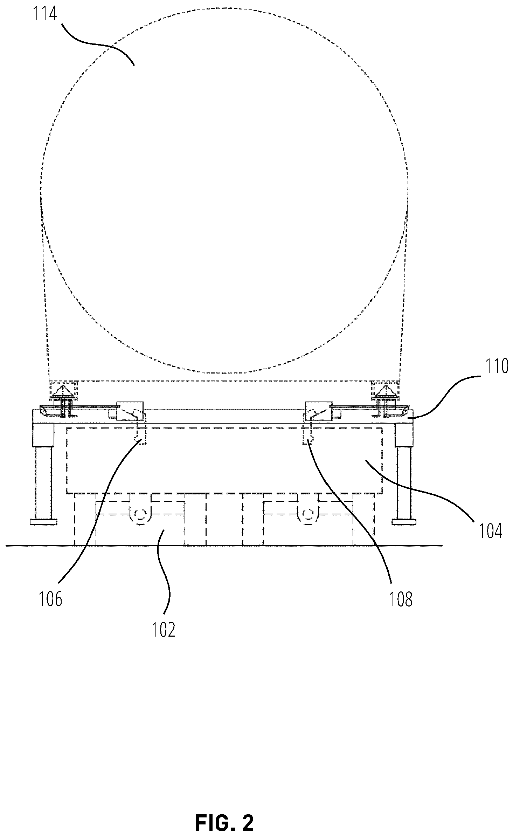

Fig. 2 shows the system according to Fig. 1 in a locked state. In the example shown the engagement means in their passive position are arranged inside the vehicle frame 104 and can be pivoted into the active position through openings in the upper side of the vehicle frame 104. The movement from the passive position into the active position in the first group of engagement means 106 takes place laterally, in the example shown by a counterclockwise movement from the right to the left. The movement from the passive position into the active position in the second group of engagement means 108 takes place laterally in the opposite direction to the first group, in the example shown by a clockwise movement from the left to the right.

The industrial truck 102 in this example is equipped with several pairs of engagement means which are arranged with a distance to each other over the length of the industrial truck. Each pair of engagement means comprises an engagement means of the first group 106 and an engagement means of the second group 108.

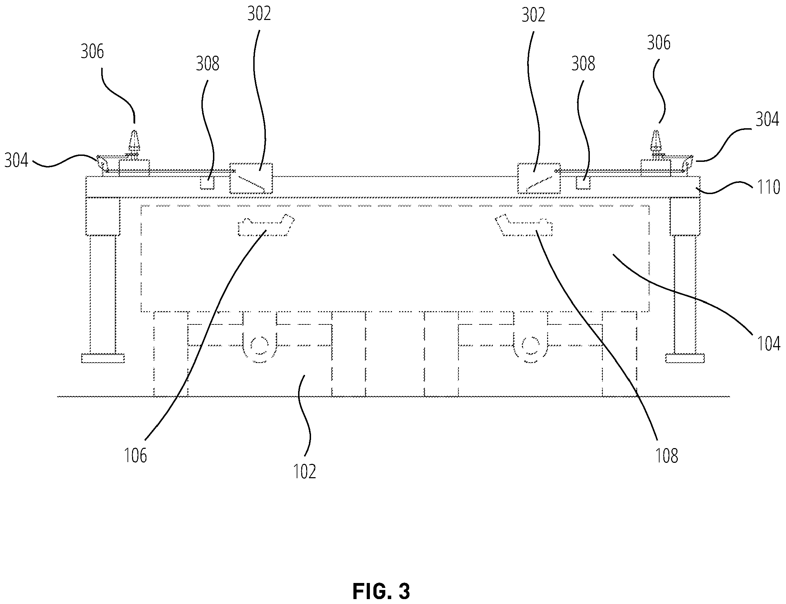

Fig. 3 shows a detailed view of the locking mechanism of the system of Fig. 1 in a front view. The self-supporting support frame 110 comprises a top side for receiving a container and an underside for placing the support frame 110 on the industrial truck 102. Locking means 306 are mounted on the support frame 110 so as to be movable between an open position and a closed position and projecting upwardly from the top side of the support frame 110 so that in their open position they can be inserted into openings on the underside of the container. The locking means 306 can be any suitable means known in the art that can interact with the openings in the container. In the example shown the locking means 306 are twist locks.

The support frame 110 further comprises a locking mechanism for actuating the locking means 306, the locking mechanism comprising sliding elements 302 that are slidably mounted inside the support frame 110 and deflection linkages 304. The deflection linkages 304 are designed such that a displacement of the sliding elements 302 causes a movement of the locking means 306 from the open position to the closed position. Openings are provided in the underside of the support frame 110 through which engagement means 106, 108 of the industrial truck 102 can act on the sliding elements 302. The sliding elements 302 are laterally displaceably mounted in the interior of the support frame 110, the displacement path of the sliding elements 302 being limited in each case by a stop 308 firmly connected to the support frame 110, and the sliding elements 302 resting against the respective stop 308 in the closed position of the locking means 306.

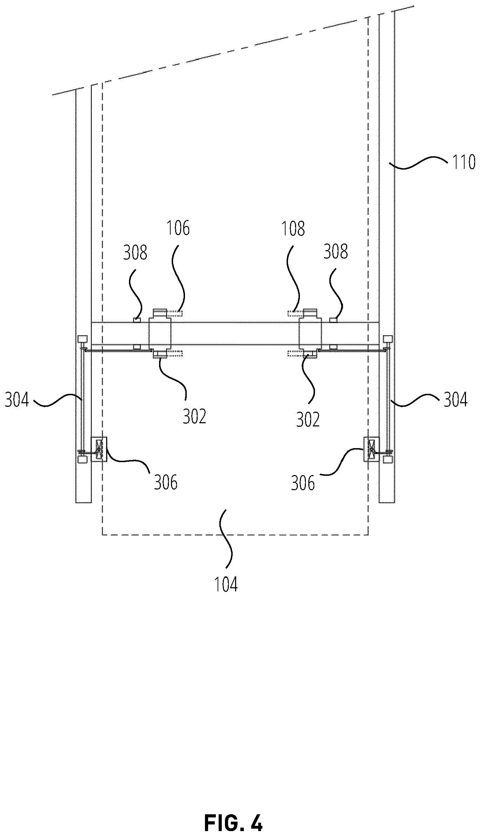

Fig. 4 shows a detailed view of the locking mechanism of the system of Fig. 1 in a top view. Each deflection linkage 304 comprises three rods, the first rod being connected to one of the sliding elements 302 and pointing outwardly in the direction of a side of the support frame 110. The second rod extends substantially parallel to the side of the support frame 110 and is connected to the first rod via a connecting element, so that the axial movement of the first rod is translated into a rotational movement of the second rod. The third rod extends from the side of the support frame 110 inwardly toward the center of the support frame 110, the third rod being connected with one end to the second rod via a connecting element so that the rotational movement of the second rod is translated into an axial movement of the third rod. At its other end the third rod is connected to the locking means 306 via a further connecting element so that the axial movement of the third rod is translated into a movement of the locking means 306 from the open position to the closed position.

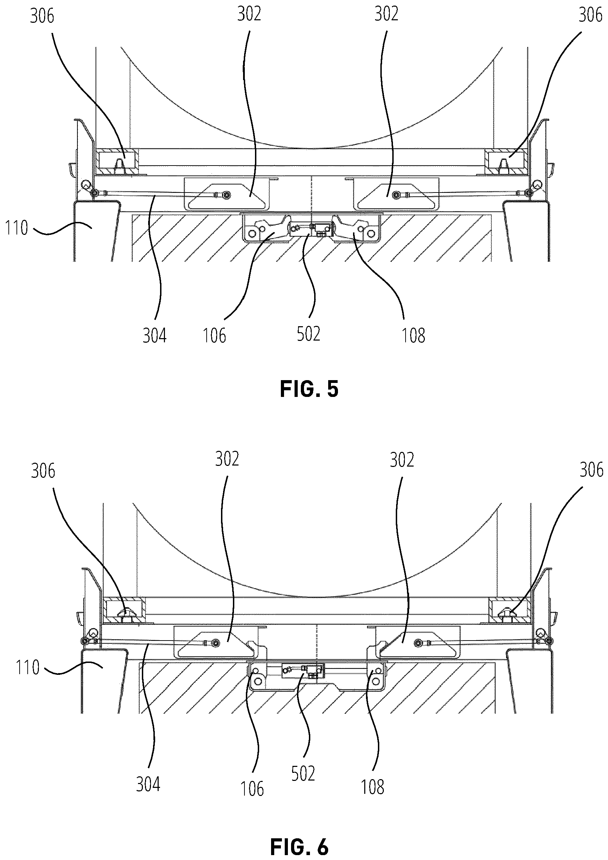

Fig. 5 shows a preferred embodiment of the locking mechanism for the system of Fig. 1 in an unlocked state. Fig. 6 shows the same locking mechanism of in a locked state.

The engagement means 106, 108 are movable from the passive position to the active position by a controllable actuator 502, the actuator comprising a safety device which ensures the application of force of the actuator on the engagement means in the active position. In the example shown in Fig. 5 the actuator 502 comprises a double-acting cylinder, and the safety device comprises a nonreturn valve.

The sliding element 302 of the support frame 110 has a shape which, when acted upon by the engagement means through the openings in the underside of the support frame 110, causes the support frame to move downwards in the direction of the engagement means 106, 108. When the first group of engagement means 106, 108 press against the sliding elements 302 in the active position, the support frame 110 is forced to move towards the vehicle frame, which prevents the support frame 110 from inadvertently moving on the vehicle frame.

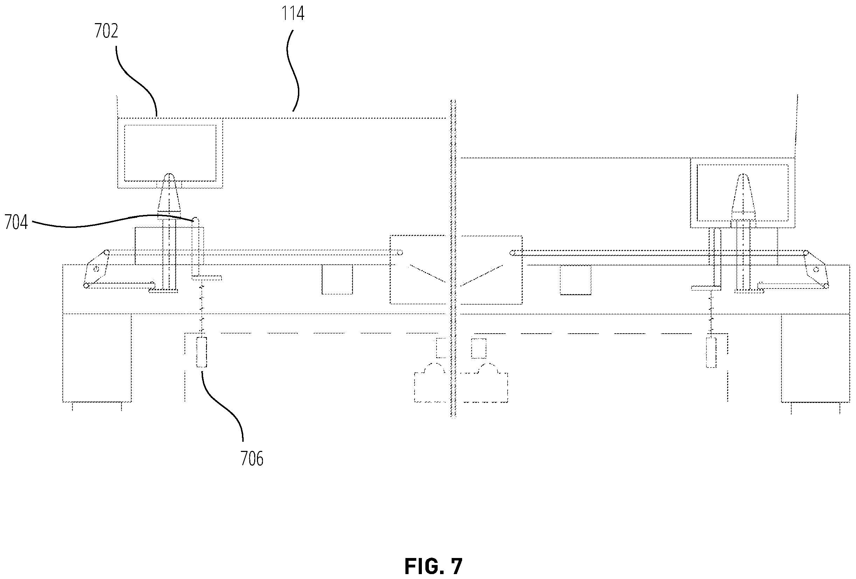

Fig. 7 shows a preferred embodiment of a position indicator 704 and a distance sensor 706 for the system of Fig. 1. The position indicator 704 comprises a pin that is vertically arranged next to the locking means. Its upper end protrudes beyond the surface of the support frame that is that is foreseen for the corner casting 702 of the container 114. The lower end of the pin is connected with a distance sensor 706 in the vehicle frame that registers a change in the vertical position of the pin.

The left-hand side of Fig. 7 shows a situation where the container 114 is being loaded onto the support frame but has not yet reached the final position. The position indicator 704 is not in contact with the corner casting 702 yet, such that the distance sensor 706 registers an unloaded situation. The right-hand side of Fig. 7 shows a situation where the container 114 rests on the surface of the support frame. The pin of the position indicator 704 has been pushed downwards in the direction of the distance sensor 706 by the weight of the container 114. The distance sensor 706 thus registers a loaded situation.

It might happen during the loading process that the container is positioned on the support frame but not in the right position, for example in a tilted or shifted position. In such a case the position indicator may be in contact with the corner casting of the container but not fully pressed down as it is the case when the corner casting fully rests on the surface of the support frame. The distance sensor 706 will then detect that there is a load on the support frame but that it is not ready to be fastened by the locking means. Thus, a potential damage of the locking means can be prevented.

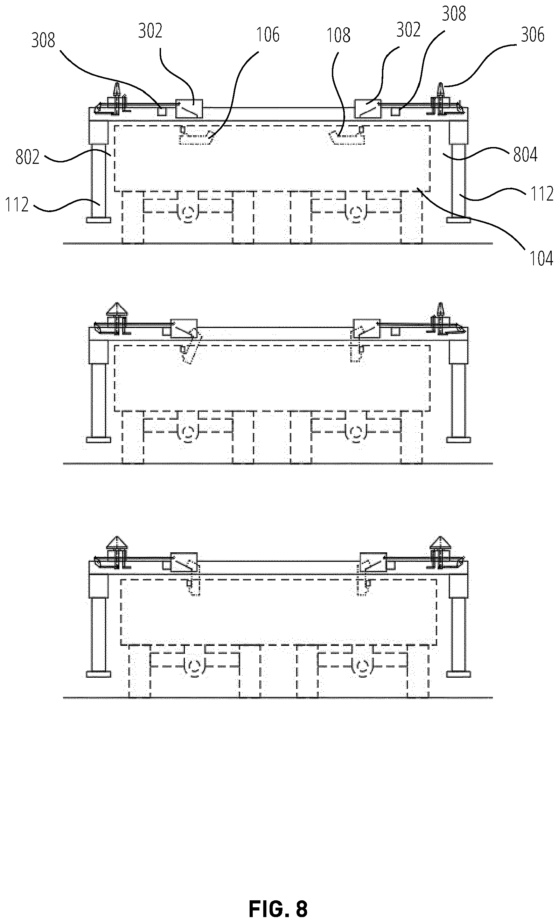

Fig. 8 shows an example of a loading process for a system according to Fig. 1. The uppermost figure of Fig. 8 shows a support frame already lifted by an industrial truck. This figure shows a situation where the industrial truck is positioned slightly more to the left side of the support frame than to the right side. The left distance 802 between the left leg 112 of the support frame and the vehicle frame 104 is smaller than the right distance 804 between the vehicle frame 104 and the right leg 112. The engagement means 106, 108 are still in the passive position.

The figure in the middle of Fig. 8 shows a situation of the loading process where the engagement means 108 on the right-hand side is already in the active position, whereas the engagement means 106 of the left-hand side is still in transition from the passive position to the active position. The sliding element on the left-hand side has already reached its final position at the stop 308 attached to the support frame, whereas there is still a lateral distance between the sliding element 302 and the stop 308 on the right-hand side.

Applying a further force by the engagement means 106 on the respective sliding element 302 on the left-hand side leads to a lateral shift of the support frame towards the left, until the sliding element 302 on the right-hand side has reached its final position at the stop 308 as well. This situation is shown in the lowermost figure of Fig. 8. In this final active position of the engagement means 106, 108 the support frame is centered with respect to the lateral dimension of the industrial truck. Thus, independent of the initial position of the industrial truck relative to the support frame, the support frame is automatically centered on the vehicle frame 104 in relation to the wheel suspension which provides an evenly distributed load on the industrial truck in the lateral direction.

In addition to the automatic centering of the support frame a container (not shown in Fig. 8) loaded on the support frame would be locked and fastened. This is indicated by the locking means 306 on the left-hand side and the right-hand side of the support frame. In the uppermost figure both locking means 306 are in their respective open position. During the transition from the passive to the active position in the middle of Fig. 8 the locking means on the left-hand side is already in its locked position as the respective sliding element 302 has reached its final position at the stop 308. The locking means 306 on the right-hand side is still in its open position. As soon as the sliding element 302 on the right-hand side has reached its final position at the respective stop 308 the locking means 306 on the right-hand side is in its locked position as well. In this final position the container is fastened to the support frame which in turn is fastened to the vehicle frame 104 of the industrial truck. The container will rest in this fastened and secured position until the engagement means 106, 108 are actively released from the sliding elements 302.

## Claims

1. An industrial truck (102) for transporting a container (114) on a support frame (110), the industrial truck comprising a vehicle frame (104) with height-adjustable wheel suspensions and engagement means (106, 108) for fixing the support frame (110) which can be picked up by the industrial truck (102), the engagement means (106, 108) being mounted on the vehicle frame (104) so as to be movable between a passive position and an active position, the industrial truck (102) having at least one sensor for detecting the position of the support frame (110) relative to the industrial truck, **characterized in that** the engagement means comprise a first group of engagement means (106) and a second group of engagement means (108), wherein the movement from the passive position into the active position in the first group of engagement means (106) takes place laterally, and the movement from the passive position into the active position in the second group of engagement means (108) takes place laterally in the opposite direction to the first group, the lateral opposite movement of the engagement means (106, 108) from the passive position to the active position allowing an automatic centering of the support frame (110) on the vehicle frame (104) in relation to the wheel suspensions and thus an equal distribution of the load in the lateral direction.

2. The industrial truck according to claim 1, wherein the engagement means (106, 108) in their passive position are arranged inside the vehicle frame (104) and can be pivoted into the active position through openings in the upper side of the vehicle frame (104).

3. The industrial truck according to claim 1 or 2, wherein the engagement means (106, 108) are arranged in pairs over the length of the industrial truck, wherein each pair comprises an engagement means (106) of the first group and an engagement means (108) of the second group.

4. The industrial truck according to any of claims 1 to 3, wherein the engagement means (106, 108) are movable from the passive position to the active position by controllable actuators (502), the actuators (520) comprising a safety device which ensures the application of force of the actuators (502) on the engagement means (106, 108) in the active position.

5. The industrial truck according to claim 4, wherein the actuators (502) comprise double-acting cylinders and the safety devices comprise a nonreturn valve.

6. The industrial truck according to any of claims 1 to 5, wherein the engagement means (106, 108) are movable from the passive position to the active position by controllable actuators (502), the actuators (520) being configured to provide equal forces to the engagement means of the first group (106) and to the engagement means of the second group (108).

7. The industrial truck according to any of claims 1 to 6, wherein at least one distance sensor (706) is provided on the upper side of the vehicle frame (104) for determining the distance between the distance sensor (706) and an object placed on the vehicle frame (104), in particular a support frame (110) for a container (114).

8. A self-supporting support frame (110) comprising a top side for receiving a container (114), an underside for placing the support frame (110) on a transport vehicle, locking means (306) being mounted on the support frame (110) so as to be movable between an open position and a closed position and projecting upwardly from the top side of the support frame (110) so that in their open position they can be inserted into openings on the underside of the container (114), and a locking mechanism for actuating the locking means (306), **characterized in that** the locking mechanism comprises sliding elements (302) and deflection linkages (304), wherein the sliding elements (302) are slidably mounted inside the support frame (110), and the deflection linkages (304) are designed such that a displacement of the sliding elements (302) causes a movement of the locking means (306) from the open position to the closed position, and wherein openings are provided in the underside of the support frame (110) through which engagement means (106, 108) of a transport vehicle can act on the sliding elements (302).

9. The self-supporting support frame according to claim 8, wherein the sliding elements (302) are laterally displaceable mounted in the interior of the support frame (110), the displacement path of the sliding elements (302) being limited in each case by a stop (308) firmly connected to the support frame (110), and the sliding elements (302) resting against the respective stop (308) in the closed position of the locking means (306).

10. The self-supporting support frame according to claim 8 or 9, wherein the sliding elements (302) have a shape which, when acted upon by engagement means (106, 108) on the sliding elements (302) through the openings in the underside of the support frame (110), causes the support frame to move downwards in the direction of the engagement means (106, 108).

11. The self-supporting support frame according to any of claims 8 to 10, wherein the deflection linkage (304) comprises at least three rods, the first rod being connected to one of the sliding elements (302) and pointing outwardly in the direction of a side of the support frame (110), the second rod extending substantially parallel to the side of the support frame (110) and being connected to the first rod via a connecting element, so that the axial movement of the first rod is translated into a rotational movement of the second rod, and the third rod extending from the side of the support frame (110) inwardly toward the center of the support frame (110), the third rod being connected to the second rod via a connecting element so that the rotational movement of the second rod is translated into an axial movement of the third rod, and the third rod being connected to the locking means (306) via a further connecting element so that the axial movement of the third rod is translated into a movement of the locking means (306) from the open position to the closed position.

12. The self-supporting support frame according to any of claims 8 to 11, wherein the support frame (110) comprises at least one movable position indicator (704) which takes different positions depending on the presence of a container (114) on the support frame (110).

13. The self-supporting support frame according to claim 12, wherein the position indicator (704) comprises a pin which is pressed towards the underside of the support frame (110) by the weight of the placed container (114).

14. A system comprising an industrial truck (102) and a self-supporting support frame (110) for receiving a container (114), wherein
the industrial truck (102) has height-adjustable wheel suspensions which allow the industrial truck to be lowered and raised relative to the road surface,
the support frame (110) comprises four legs (112), the lateral distance of which is greater than the width of the industrial truck (120), and the height of which is dimensioned such that the industrial truck (102) can be moved under the support frame (110) in the lowered state, and in the raised state of the industrial truck (102) the legs (112) are at a distance from the road surface,
**characterized in that** the industrial truck (102) has movable engagement means (106, 108) which can engage in openings provided for this purpose in the support frame (110) in order to fix the support frame on the industrial truck (102), the support frame (110) comprising a locking device which is actuated by the engagement of the engagement means (106, 108) and fixes a container (114) located on the support frame (110) in the locked state.

15. The system according to claim 14, wherein the support frame (110) comprises movable position indicators (704) that take different positions depending on the presence of a container (114) on the support frame (110), and in that the industrial truck (102) comprises sensors that can detect the different positions of the position indicators (704).

16. The system according to claim 14 or 15, wherein the industrial truck (102) has distance sensors (706) at locations corresponding to the position indicators (704) of the support frame (110), which are set up to determine the distance between the respective position indicator (704) and the associated distance sensor (706).

## Patentansprüche

1. Flurförderer (102) zum Transportieren eines Behälters (114) auf einem Stützrahmen (110), wobei der Flurförderer einen Fahrzeugrahmen (104) mit höhenverstellbaren Radaufhängungen und Eingriffsmitteln (106, 108) zum Fixieren des Stützrahmens (110) umfasst, der durch den Flurförderer (102) aufgenommen werden kann, wobei die Eingriffsmittel (106, 108) am Fahrzeugrahmen (104) montiert sind, um zwischen einer passiven Position und einer aktiven Position bewegbar zu sein, wobei der Flurförderer (102) zumindest einen Sensor zum Detektieren der Position des Stützrahmens (110) relativ zum Flurförderer aufweist, **dadurch gekennzeichnet, dass** die Eingriffsmittel eine erste Gruppe von Eingriffsmitteln (106) und eine zweite Gruppe von Eingriffsmitteln (108) umfassen, wobei die Bewegung von der passiven Position in die aktive Position in der ersten Gruppe von Eingriffsmitteln (106) lateral erfolgt und die Bewegung von der passiven Position in die aktive Position in der zweiten Gruppe von Eingriffsmitteln (108) lateral in der zur ersten Gruppe entgegengesetzten Richtung erfolgt, wobei die lateral entgegengesetzte Bewegung der Eingriffsmittel (106, 108) von der passiven Position in die aktive Position eine automatische Zentrierung des Stützrahmens (110) am Fahrzeugrahmen (104) in Beziehung zu den Radaufhängungen und damit eine gleichmäßige Verteilung der Last in der lateralen Richtung ermöglicht.

2. Flurförderer nach Anspruch 1, wobei die Eingriffsmittel (106, 108) in ihrer passiven Position in dem Fahrzeugrahmen (104) angeordnet sind und durch Öffnungen in der oberen Seite des Fahrzeugrahmens (104) in die aktive Position geschwenkt werden können.

3. Flurförderer nach Anspruch 1 oder 2, wobei die Eingriffsmittel (106, 108) in Paaren über die Länge des Flurförderers hinweg angeordnet sind, wobei jedes Paar ein Eingriffsmittel (106) der ersten Gruppe und ein Eingriffsmittel (108) der zweiten Gruppe umfasst.

4. Flurförderer nach einem der Ansprüche 1-3, wobei die Eingriffsmittel (106, 108) durch steuerbare Aktuatoren (502) aus der passiven Position in die aktive Position bewegbar sind, wobei die Aktuatoren (520) eine Sicherheitsvorrichtung umfassen, die das Anlegen von Kraft der Aktuatoren (502) an die Eingriffsmittel (106, 108) in der aktiven Position sicherstellt.

5. Flurförderer nach Anspruch 4, wobei die Aktuatoren (502) doppelt wirkende Zylinder umfassen und die Sicherheitsvorrichtung ein Rückschlagventil umfasst.

6. Flurförderer nach einem der Ansprüche 1 bis 5, wobei die Eingriffsmittel (106, 108) durch steuerbare Aktuatoren (502) von der passen Position in die aktive Position bewegbar sind, wobei die Aktuatoren (520) ausgelegt sind zum Bereitstellen von gleichmäßigen Kräften an den Eingriffsmitteln der ersten Gruppe (106) und an den Eingriffsmitteln der zweiten Gruppe (108).

7. Flurförderer nach einem der Ansprüche 1-6, wobei mindestens ein Abstandssensor (706) an der oberen Seite des Fahrzeugrahmens (104) zur Bestimmung des Abstands zwischen dem Abstandssensor (706) und einem auf dem Fahrzeugrahmen (104), insbesondere einem Stützrahmen (110) für einen Behälter (114), platzierten Objekt vorgesehen ist.

8. Selbsttragender Stützrahmen (110), der eine obere Seite zum Aufnehmen eines Behälters (114), eine Unterseite zum Platzieren des Stützrahmens (110) auf einem Transportfahrzeug, Verriegelungsmittel (306), die an dem Stützrahmen (110) befestigt sind, um zwischen einer offenen Position und einer geschlossenen Position bewegbar zu sein, und die von der oberen Seite des Stützrahmens (110) nach oben herausragen, so dass sie in ihrer offenen Position in Öffnungen an der Unterseite des Behälters (114) eingeführt werden können, und einen Verriegelungsmechanismus zum Betätigen der Verriegelungsmittel (306) umfasst, **dadurch gekennzeichnet, dass** der Verriegelungsmechanismus Gleitelemente (302) und Umlenkgestänge (304) umfasst, wobei die Gleitelemente (302) in dem Stützrahmen (110) verschiebbar befestigt sind und die Umlenkgestänge (304) so konstruiert sind, dass eine Verschiebung der Gleitelemente (302) eine Bewegung der Verriegelungsmittel (306) aus der offenen Position in die geschlossene Position bewirkt, und wobei Öffnungen in der Unterseite des Stützrahmens (110) vorgesehen sind, durch die Eingriffsmittel (106, 108) eines Transportfahrzeugs auf die Gleitelemente (302) wirken können.

9. Selbsttragender Stützrahmen nach Anspruch 8, wobei die Gleitelemente (302) lateral verschiebbar in dem Inneren des Stützrahmens (110) befestigt sind, wobei der Verschiebungspfad der Gleitelemente (302) in jedem Fall durch einen Anschlag (308), der mit dem Stützrahmen (110) fest verbunden ist, begrenzt wird, und wobei die Gleitelemente (302) in der geschlossenen Position der Verriegelungsmittel (306) an dem jeweiligen Anschlag (308) anliegen.

10. Selbsttragender Stützrahmen nach Anspruch 8 oder 9, wobei die Gleitelemente (302) eine Form aufweisen, die bei Einwirkung von den Eingriffsmitteln (106, 108) an den Gleitelementen (302) durch die Öffnungen in der Unterseite des Stützrahmens (110) bewirkt, dass sich der Stützrahmen in der Richtung der Eingriffsmittel (106, 108) abwärts bewegt.

11. Selbsttragender Stützrahmen nach einem der Ansprüche 8-10, wobei das Umlenkgestänge (304) mindestens drei Stangen umfasst, wobei die erste Stange mit einem der Gleitelemente (302) verbunden ist und in der Richtung einer Seite des Stützrahmens (110) nach außen weist, wobei sich die zweite Stange im Wesentlichen parallel zu der Seite des Stützrahmens (110) erstreckt und über ein Verbindungselement mit der ersten Stange verbunden ist, so dass die axiale Bewegung der ersten Stange in eine Drehbewegung der zweiten Stange umgewandelt wird, und wobei sich die dritte Stange von der Seite des Stützrahmens (110) zu der Mitte des Stützrahmens (110) nach innen erstreckt, wobei die dritte Stange über ein Verbindungselement mit der zweiten Stange verbunden ist, so dass die Drehbewegung der zweiten Stange in eine axiale Bewegung der dritten Stange umgewandelt wird, und wobei die dritte Stange über ein weiteres Verbindungselement mit den Verriegelungsmitteln (306) verbunden ist, so dass die axiale Bewegung der dritten Stange in eine Bewegung der Verriegelungsmittel (306) aus der offenen Position in die geschlossene Position umgewandelt wird.

12. Selbsttragender Stützrahmen nach einem der Ansprüche 8-11, wobei der Stützrahmen (110) mindestens eine bewegliche Positionsanzeigevorrichtung (704) umfasst, die in Abhängigkeit von dem Vorhandensein eines Behälters (114) auf dem Stützrahmen (110) verschiedene Positionen einnimmt.

13. Selbsttragender Stützrahmen nach Anspruch 12, wobei die Positionsanzeigevorrichtung (704) einen Stift umfasst, der durch das Gewicht des platzierten Behälters (114) zur Unterseite des Stützrahmens (110) gedrückt wird.

14. System, das einen Flurförderer (102) und einen selbsttragenden Stützrahmen (110) zur Aufnahme eines Behälters (114) umfasst, wobei
der Flurförderer (102) höhenverstellbare Radaufhängungen aufweist, die das Anheben und Absenken des Flurförderers bezüglich der Straßenoberfläche gestatten,
der Stützrahmen (110) vier Füße (112) umfasst, deren lateraler Abstand größer als die Breite des Flurförderers (120) ist und deren Höhe so dimensioniert ist, dass der Flurförderer (102) in dem abgesenkten Zustand unter den Stützrahmen (110) bewegt werden kann und sich die Füße (112) in dem angehobenen Zustand des Flurförderers (102) in einem Abstand zur Straßenoberfläche befinden,
**dadurch gekennzeichnet, dass** der Flurförderer (102) bewegliche Eingriffsmittel (106, 108) aufweist, die in zu diesem Zweck in dem Stützrahmen (110) vorgesehene Öffnungen eingreifen können, um den Stützrahmen an dem Flurförderer (102) zu fixieren, wobei der Stützrahmen (110) eine Verriegelungsvorrichtung umfasst, die durch den Eingriff der Eingriffsmittel (106, 108) betätigt wird und einen auf dem Stützrahmen (110) positionierten Behälter (114) in dem verriegelten Zustand fixiert.

15. System nach Anspruch 14, wobei der Stützrahmen (110) bewegliche Positionsanzeigevorrichtungen (704) umfasst, die in Abhängigkeit von dem Vorhandensein eines Behälters (114) auf dem Stützrahmen (110) verschiedene Positionen einnehmen können, und wobei der Flurförderer (102) Sensoren umfasst, die die verschiedenen Positionen der Positionsanzeigevorrichtungen (704) detektieren können.

16. System nach Anspruch 14 oder 15, wobei der Flurförderer (102) Abstandssensoren (706) an Stellen aufweist, die den Positionsanzeigevorrichtungen (704) des Stützrahmens (110) entsprechen, die dazu eingerichtet sind, den Abstand zwischen der jeweiligen Positionsanzeigevorrichtung (704) und dem zugehörigen Sensor (706) zu bestimmen.

## Revendications

1. Camion industriel (102) pour transporter un conteneur (114) sur un châssis de support (110), le camion industriel comprenant un châssis de véhicule (104) avec des suspensions de roue ajustables en hauteur et des moyens d'entrée en prise (106, 108) pour fixer le châssis de support (110) qui peut être ramassé par le camion industriel (102), les moyens d'entrée en prise (106, 108) étant montés sur le châssis de véhicule (104) afin d'être mobiles entre une position passive et une position active, le camion industriel (102) ayant au moins un capteur destiné à détecter la position du châssis de support (110) relativement au camion industriel, **caractérisé en ce que** les moyens d'entrée en prise comprennent un premier groupe de moyens d'entrée en prise (106) et un second groupe de moyens d'entrée en prise (108), dans lequel le mouvement depuis la position passive jusque dans la position active dans le premier groupe de moyens d'entrée en prise (106) a lieu latéralement, et le mouvement depuis la position passive jusque dans la position active dans le second groupe de moyens d'entrée en prise (108) a lieu latéralement dans la direction opposée au premier groupe, le mouvement opposé latéral des moyens d'entrée en prise (106, 108) depuis la position passive jusqu'à la position active permettant un centrage automatique du châssis de support (110) sur le châssis de véhicule (104) par rapport aux suspensions de roue et ainsi une distribution égale de la charge dans la direction latérale.

2. Camion industriel selon la revendication 1, dans lequel les moyens d'entrée en prise (106, 108) dans leur position passive sont agencés à l'intérieur du châssis de véhicule (104) et peuvent être mis en pivotement dans la position active à travers des ouvertures dans le côté supérieur du châssis de véhicule (104).

3. Camion industriel selon la revendication 1 ou 2, dans lequel les moyens d'entrée en prise (106, 108) sont agencés en paires sur la longueur du camion industriel, dans lequel chaque paire comprend un moyen d'entrée en prise (106) du premier groupe et un moyen d'entrée en prise (108) du second groupe.

4. Camion industriel selon l'une quelconque des revendications 1 à 3, dans lequel les moyens d'entrée en prise (106, 108) sont mobiles depuis la position passive jusqu'à la position active par l'intermédiaire d'actionneurs commandables (502), les actionneurs (520) comprenant un dispositif de sécurité qui garantit l'application de force des actionneurs (502) sur les moyens d'entrée en prise (106, 108) dans la position active.

5. Camion industriel selon la revendication 4, dans lequel les actionneurs (502) comprennent des vérins à double effet et les dispositifs de sécurité comprennent une soupape de non-retour.

6. Camion industriel selon l'une quelconque des revendications 1 à 5, dans lequel les moyens d'entrée en prise (106, 108) sont mobiles depuis la position passive jusqu'à la position active par l'intermédiaire d'actionneurs commandables (502), les actionneurs (520) étant configurés pour fournir des forces égales aux moyens d'entrée en prise du premier groupe (106) et aux moyens d'entrée en prise du second groupe (108).

7. Camion industriel selon l'une quelconque des revendications 1 à 6, dans lequel au moins un capteur de distance (706) est prévu sur le côté supérieur du châssis de véhicule (104) pour déterminer la distance entre le capteur de distance (706) et un objet placé sur le châssis de véhicule (104), en particulier un châssis de support (110) pour un conteneur (114).

8. Châssis de support autoporteur (110) comprenant un côté supérieur destiné à recevoir un conteneur (114), un côté inférieur destiné à placer le châssis de support (110) sur un véhicule de transport, des moyens de verrouillage (306) étant montés sur le châssis de support (110) afin d'être mobiles entre une position ouverte et une position fermée et faisant saillie vers le haut depuis le côté supérieur du châssis de support (110) de manière telle que, dans leur position ouverte, ils peuvent être insérés dans des ouvertures sur le côté inférieur du conteneur (114), et un mécanisme de verrouillage pour actionner les moyens de verrouillage (306), **caractérisé en ce que** le mécanisme de verrouillage comprend des éléments coulissants (302) et des tringleries de déviation (304), dans lequel les éléments coulissants (302) sont montés de façon à pouvoir coulisser à l'intérieur du châssis de support (110), et les tringleries de déviation (304) sont conçues de telle sorte qu'un déplacement des éléments coulissants (302) entraîne un mouvement des moyens de verrouillage (306) depuis la position ouverte jusqu'à la position fermée, et dans lequel des ouvertures sont prévues dans le côté inférieur du châssis de support (110) à travers lesquelles des moyens d'entrée en prise (106, 108) d'un véhicule de transport peuvent agir sur les éléments coulissants (302).

9. Châssis de support autoporteur selon la revendication 8, dans lequel les éléments coulissants (302) sont montés de façon latéralement déplaçable dans la partie intérieure du châssis de support (110), le chemin de déplacement des éléments coulissants (302) étant limité dans chaque cas par une butée (308) fermement reliée au châssis de support (110), et les éléments coulissants (302) reposant contre la butée respective (308) dans la position fermée des moyens de verrouillage (306).

10. Châssis de support autoporteur selon la revendication 8 ou 9, dans lequel les éléments coulissants (302) ont une forme qui, lorsque les moyens d'entrée en prise (106, 108) sur les éléments coulissants (302) agissent sur ceux-ci à travers les ouvertures dans le côté inférieur du châssis de support (110), amène le châssis de support à se mouvoir vers le bas dans la direction des moyens d'entrée en prise (106, 108).

11. Châssis de support autoporteur selon l'une quelconque des revendications 8 à 10, dans lequel la tringlerie de déviation (304) comprend au moins trois tiges, la première tige étant reliée à un des éléments coulissants (302) et étant dirigée vers l'extérieur dans la direction d'un côté du châssis de support (110), la deuxième tige s'étendant de façon sensiblement parallèle au côté du châssis de support (110) et étant reliée à la première tige par l'intermédiaire d'un élément de liaison, de manière telle que le mouvement axial de la première tige est transformé en un mouvement de rotation de la deuxième tige, et la troisième tige s'étendant depuis le côté du châssis de support (110) vers l'intérieur vers le centre du châssis de support (110), la troisième tige étant reliée à la deuxième tige par l'intermédiaire d'un élément de liaison de manière telle que le mouvement de rotation de la deuxième tige est transformé en un mouvement axial de la troisième tige, et la troisième tige étant reliée aux moyens de verrouillage (306) par l'intermédiaire d'un élément de liaison supplémentaire de manière telle que le mouvement axial de la troisième tige est transformé en un mouvement des moyens de verrouillage (306) depuis la position ouverte jusqu'à la position fermée.

12. Châssis de support autoporteur selon l'une quelconque des revendications 8 à 11, dans lequel le châssis de support (110) comprend au moins un indicateur de position mobile (704) qui adopte différentes positions en fonction de la présence d'un conteneur (114) sur le châssis de support (110).

13. Châssis de support autoporteur selon la revendication 12, dans lequel l'indicateur de position (704) comprend une goupille qui est pressée vers le côté inférieur du châssis de support (110) par le poids du conteneur placé (114).

14. Système comprenant un camion industriel (102) et un châssis de support autoporteur (110) destiné à recevoir un conteneur (114), dans lequel
le camion industriel (102) a des suspensions de roue ajustables en hauteur qui permettent au camion industriel d'être abaissé et élevé relativement à la surface de route,
le châssis de support (110) comprend quatre pieds (112), dont la distance latérale est plus grande que la largeur du camion industriel (120), et dont la hauteur est dimensionnée de telle sorte que le camion industriel (102) peut être mû sous le châssis de support (110) dans l'état abaissé, et, dans l'état élevé du camion industriel (102), les pieds (112) sont à une distance de la surface de route,
**caractérisé en ce que** le camion industriel (102) a des moyens d'entrée en prise mobiles (106, 108) qui peuvent entrer en prise dans des ouvertures prévues dans ce but dans le châssis de support (110) afin de fixer le châssis de support sur le camion industriel (102), le châssis de support (110) comprenant un dispositif de verrouillage qui est actionné par l'entrée en prise des moyens d'entrée en prise (106, 108) et fixe un conteneur (114) situé sur le châssis de support (110) dans l'état verrouillé.

15. Système selon la revendication 14, dans lequel le châssis de support (110) comprend des indicateurs de position mobiles (704) qui adoptent différentes positions en fonction de la présence d'un conteneur (114) sur le châssis de support (110), et dans lequel le camion industriel (102) comprend des capteurs qui peuvent détecter les différentes positions des indicateurs de position (704).

16. Système selon la revendication 14 ou 15, dans lequel le camion industriel (102) a des capteurs de distance (706) à des emplacements correspondant aux indicateurs de position (704) du châssis de support (110), qui sont installés pour déterminer la distance entre l'indicateur de position respectif (704) et le capteur de distance associé (706).
